# FASCICULE DE BREVET EUROPEEN

(11) **EP 0 852 797 B1**
(45) Date de publication et mention de la délivrance du brevet: **12.01.2000**
(21) Numéro de dépôt: 96931691.8
(22) Date de dépôt: 20.09.1996
(51) Int. Cl.: G11B 33/04

(54) **EMBALLAGE COMPORTANT UN MOYEN DE DIFFUSION D'UN MESSAGE ET PLAQUETTE POUR SUPPORTER CE MOYEN**
VERPACKUNG MIT MITTEL ZUR VERBREITUNG EINER MITTEILUNG UND HALTEPLATTE FÜR DAS MITTEL
PACKAGING COMPRISING A MESSAGE TRANSMISSION MEANS, AND BOARD FOR SUPPORTING SAID MEANS

(30) Priorité: 26.09.1995 BE 9500793
(43) Date de publication de la demande: 15.07.1998
(73) Titulaire: Ciechanowski, Stanislas, 1300 Wavre (BE)
(72) Inventeur: Ciechanowski, Stanislas, 1300 Wavre (BE)
(74) Mandataire: Breese, Pierre
(86) Numéro de dépôt international: BE9600098
(87) Numéro de publication internationale: WO9712365

(56) Documents cités:
- EP-A- 0 509 284
- US-A- 5 081 446
- FUNK-TECHNIK, vol. 38, no. 7, 1983, pages 281-283, XP000600117 "Einchip FM Emphänger für UKW-kleinstradio's"
- FUNKSCHAU, vol. 14, 1983, GERMANY, pages 35-36, XP002011709 W. ZETZMANN: "FM-Emphänger mit 16 Beinen"

## Description

La présente invention concerne un emballage agencé pour protéger au moins un support d'enregistrement du type disque compact audio, vidéo, ou cassette audio, vidéo en particulier un emballage scellé à l'encontre d'une manipulation non autorisée de son contenu par un individu.

Par exemple, lors du choix d'un enregistrement de musique sur disque compact ("Compact Disc"®) ou sur cassette audio, il faut jusqu'à présent demander à un préposé d'un magasin de faire jouer un extrait de l'enregistrement afin de se rendre compte du genre de musique. Ce préposé peut être absent ou être occupé avec un autre client. L'emballage du disque compact peut être scellé et le préposé, ne voulant pas ouvrir cet emballage, doit chercher un autre disque semblable. L'emballage peut ne pas être scellé mais vide comme cela se pratique fréquemment et alors le préposé doit retrouver le contenu, sans se tromper, etc.

Par exemple aussi, un non-voyant ou un malvoyant peut souhaiter acquérir un tel enregistrement ou un autre type de produit emballé mais, jusqu'à ce jour, ne peut pas le faire sans aide.

La présente invention a pour but de remédier à ces inconvénients et de donner un moyen simple et immédiatement utilisable par tout individu désireux de prendre connaissance d'informations concernant un produit emballé, ceci pouvant être par exemple l'audition d'un extrait de musique caractéristique d'un disque compact ou, en particulier pour un mal-voyant mais aussi pour un analphabète, l'audition d'un message d'information au sujet d'un produit emballé.

A cet effet, l'emballage suivant 1' invention concerne un emballage agencé pour protéger au moins un support d'enregistrement du type disque compact, audio, vidéo, optique ou cassette audio ou vidéo ou un support de données numériques pour ordinateur comportant un moyen électronique de diffusion d'au moins un message sonore et/ou visuel et, pour enclencher une diffusion du message, un moyen de commande agencé pour être actionné de l'extérieur de l'emballage. Ces moyens de diffusion et de commande peuvent être appliqués sur l'emballage.

Suivant une forme de réalisation avantageuse de l'invention, le moyen électronique de diffusion et/ou le moyen de commande sont agencés dans l'emballage scellé.

Avantageusement, le moyen de diffusion de message et éventuellement le moyen de commande étant agencés sur une plaquette construite pour être disposée dans le boîtier de protection, éventuellement à la place d'un carton imprimé usuel dans ce type d'emballage.

L'invention concerne également un emballage contenant une plaquette incorporée dans cet emballage à sceller après l'incorporation de la plaquette et d'un contenu, de façon à obtenir un emballage susdit.

A cet effet, la plaquette comporte un moyen électronique de diffusion d'un message sonore et/ou visuel, comportant éventuellement une source de courant électrique, et en ce que, le cas échéant, elle comporte également le moyen de commande pour enclencher la diffusion.

D'autres détails et particularités de l'invention ressortiront des revendications dépendantes et de la description des dessins qui sont annexés au présent mémoire et qui illustrent, à titre d'exemples non limitatifs des formes de réalisation d'emballages et de plaquettes de l'invention.

La figure 1 représente schématiquement en perspective un boîtier de protection d'un disque compact suivant l'invention.

La figure 2 représente schématiquement le câblage d'une plaquette de l'invention, agencée pour être introduite dans le boîtier de protection de la figure 1, sans avoir à modifier celui-ci.

La figure 3 représente un boîtier de cassette d'enregistrement audio agencé suivant l'invention.

La figure 4 représente schématiquement le câblage d'une plaquette de l'invention, agencée pour être introduite dans le boîtier de la figure 3, sans avoir à modifier celui-ci.

Dans les différentes figures, les mêmes notations de référence désignent des éléments identiques ou analogues.

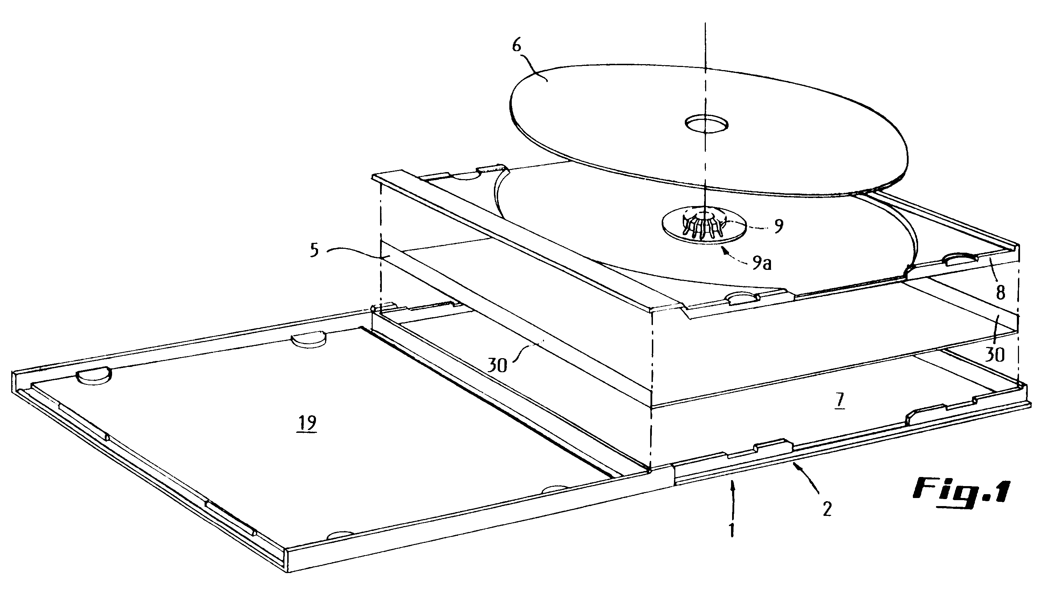

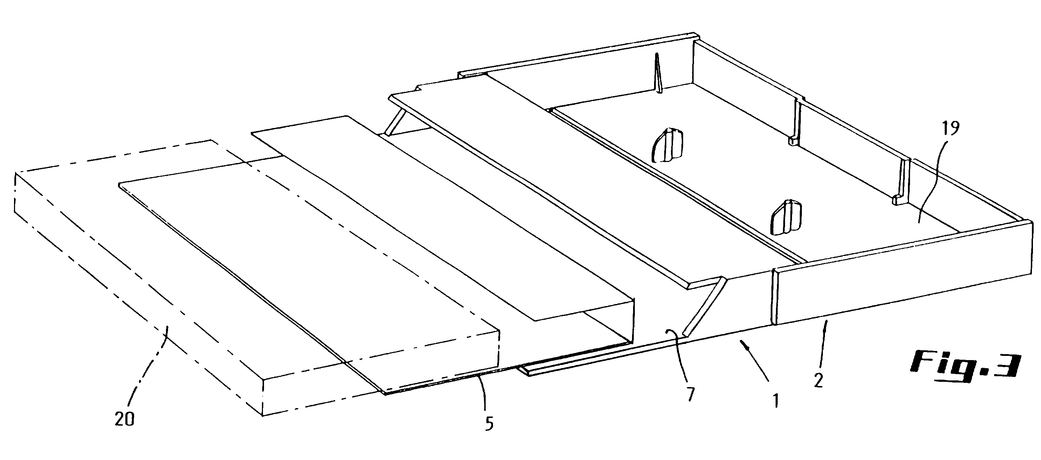

L'emballage 1 de l'invention (figures 1 et 3) est destiné en particulier (mais sans y être limité) au cas de produits emballés par exemple sous feuille plastique ou cellophane de façon à empêcher un individu de manipuler sans autorisation, et sans laisser de signe visible de sa manipulation, le contenu de l'emballage. Il en est ainsi par exemple des disques compacts 6, des cassettes audio 20, etc. que l'on emballe de cette façon pour qu'un individu ne puisse pas détériorer le disque compact ou la cassette et ne puisse pas les retirer et les emporter frauduleusement, tout en laissant sur place le boîtier vide, dans le but de masquer son geste frauduleux.

Si un individu veut écouter à présent un extrait du disque ou de la cassette, il doit agir comme indiqué ci-dessus.

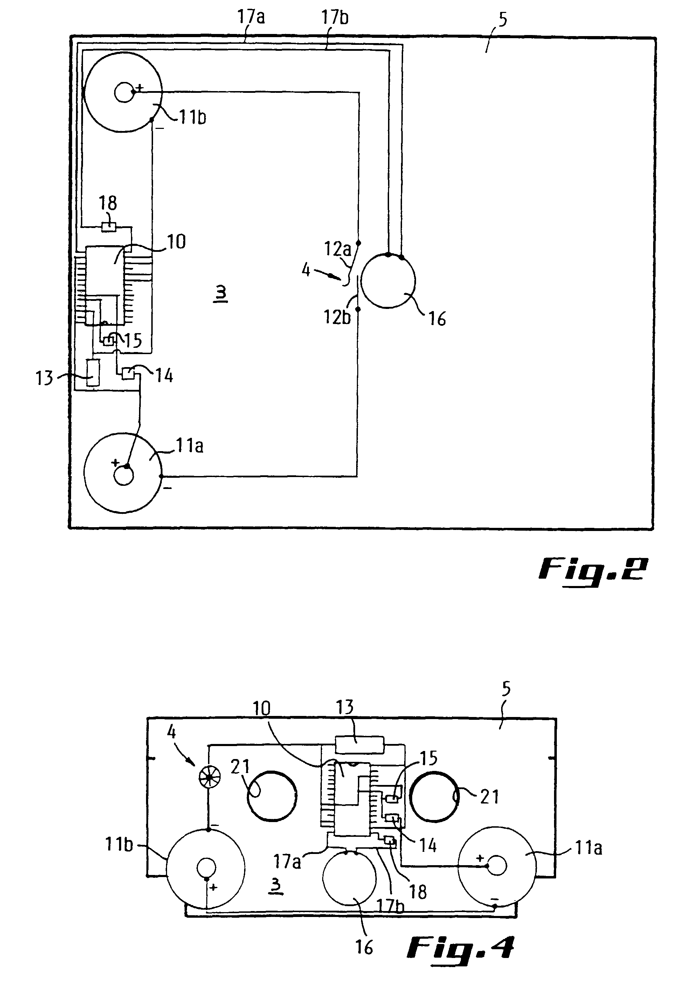

Pour pallier à cet inconvénient (figure 1) la présente invention propose un emballage 1 qui, outre par exemple un boîtier de protection 2 usuel comporte un moyen électronique 3 de diffusion d'au moins un message sonore et/ou visuel et un moyen de commande 4 agencé pour être actionné de l'extérieur de l'emballage 1. Un moyen électronique 3 de diffusion, dans le cas d'un message sonore, est représenté à la figure 2.

Le moyen électronique de diffusion 3 de la figure 2 est monté sur une plaquette 5 dont les dimensions sont choisies pour que l'on puisse insérer cette plaquette dans le boîtier 2 usuel d'un disque compact 6, de préférence entre une paroi latérale 7 du boîtier 2 et une plaque 8 montée usuellement dans celui-ci et destinée à supporter le disque 6 par un moyeu fixe 9 connu, obtenu par un renfoncement 9a de cette plaque 8 vers l'intérieur du boîtier 1 (vu en partant de la paroi 7).

La plaquette 5 de la figure 2 peut être du type à circuit imprimé et comporter par exemple, pour mémoriser un message sonore, un circuit intégré 10 du type ISD 2560G ou ISD 1420 fabriqué par la société "ISD" et mis en vente sur le marché belge par la société RODELCO, Avenue de Limbourg Stirum, 243 à 1780 Wemmel, Belgique. Un tel circuit intégré 10 permet un enregistrement d'un ou de plusieurs messages sonores de par exemple 60, 75 ou 90 secondes au total et, bien que conçu pour des enregistrements de voix, il s'avère apte à enregistrer et reproduire de la musique. Bien entendu, d'autres circuits intégrés tels que ceux qui reproduisent une voix et/ou une musique synthétisée peuvent également être utilisés. De plus, pour des messages de durée supérieure, deux ou plusieurs circuits intégrés 10 peuvent être agencés de façon correspondante par l'homme de métier.

Pour l'alimentation du circuit intégré 10, l'homme de métier connaît les éléments électroniques à choisir pour compléter le circuit de la plaquette 5. Ainsi, deux piles d'alimentation 11 (11a et 11b) (référence CR 2025 ou CR 2430) sont branchées en série par le moyen de commande 4 (schématisé à la figure 2) composé par exemple de deux lamelles élastiques 12a et 12b à mettre en contact par pression. Le pôle positif de la pile lla est relié à une borne d'un condensateur 13 de 22 µF/10 V, à une borne d'une résistance 14 de 10 kn et à deux broches du circuit intégré 10. L'autre borne du condensateur 13 est reliée à six broches du circuit intégré 10 et au pôle négatif de la pile 11b. L'autre borne de la résistance 14 est reliée à une broche du circuit intégré 10 et à une borne d'une résistance 15 de 10 kΩ dont l'autre borne est reliée à une broche du circuit intégré 10. Toutes les broches du circuit intégré 10 utilisé dans le présent exemple sont représentées par des traits équidistants et sont orientées par rapport à l'encoche de repérage connue; elles ne doivent donc pas être explicitées autrement pour l'homme de métier.

Pratiquement au centre de la plaquette 5, il est avantageusement installé un convertisseur 16 de signaux électriques en sons. Ce convertisseur 16 peut être constitué par exemple par la partie interne d'un écouteur de "baladeur" ("Walkman"). Le convertisseur 16 est alimenté par deux fils 17 (17a, 17b) reliés à deux broches du circuit intégré 10, par l'intermédiaire d'une résistance 18 de 15 Ω pour le fil 17b et en direct pour le fil 17a.

La plaquette 5 est avantageusement construite de façon à pouvoir être incorporée dans le boîtier 2 sans devoir apporter la moindre modification à celui-ci.

La plaquette 5 est installée dans l'emballage 1 dans la présente forme de réalisation. De plus, dans ce cas le moyen de commande 4 est agencé sur la plaquette 5 et est donc également dans l'emballage 1.

Par exemple, une des lamelles élastiques 12a du moyen de commande 4 réalisé sous la forme d'un commutateur à lamelles est agencée pour prendre appui contre la paroi latérale 7 du boîtier 2 lorsque la plaquette 5 est placée dans celui-ci et lorsque la plaque 8 est fixée dans sa position de réception d'un disque dans le boîtier 2. La lamelle 12a a alors une fonction d'organe de commande par pression et l'autre lamelle 12b est agencée sur la plaquette 5 de manière que, lorsque la paroi latérale 7 élastiquement déformable par sa nature est pressée vers l'intérieur du boîtier, elle pousse l'organe de commande par pression ou lamelle 12a jusqu'à entrer en contact avec la lamelle 12b et à fermer le circuit d'alimentation du circuit intégré 10 de façon à par exemple enclencher une reproduction du message sonore soit uniquement pendant le temps de fermeture du circuit soit pour la durée complète du message après une impulsion de fermeture du circuit.

La position du convertisseur 16 telle qu'indiquée ci-dessus est avantageusement choisie pour que celui-ci soit logé dans le renfoncement 9a précité.

De même, l'organe de commande par pression 12a est avantageusement agencé sur la plaquette 5 de façon à être situé à proximité de ce renfoncement 9a à l'état monté de l'emballage 1 suivant la figure 1.

Ainsi, lorsqu'un individu averti du maniement de l'emballage 1 applique celui-ci contre son oreille, renfoncement 9a en face de celle-ci, et lorsqu'il presse l'emballage 1 contre son oreille en y appuyant une des parois latérales 7 ou 19 de celui-ci par une action sur l'autre paroi latérale 19 ou 7, au moins la paroi 7 se déforme et actionne l'organe de commande 12a. En fait, les deux parois 19 et 7 se déforment et pressent l'une contre l'autre la plaque 8 et la plaquette 5 et donc l'organe de commande par pression 12a contre la lamelle 12b.

Des éléments saillants du moyen électronique de diffusion 3, par exemple le circuit intégré 10 et les piles 11, sont agencés sur la plaquette 5 de façon à être situés dans des espaces libres du boîtier de protection 2, comme dans un renfoncement existant le long d'un bord de la plaque 8, de préférence sans qu'il ne faille apporter des modifications à ce boîtier 2.

La présente invention a été décrite jusqu'à présent dans le cas de signaux sonores. Il va de soi qu'avec la miniaturisation des moyens électroniques actuels, des messages peuvent également être visuels et/ou sonores. Des écrans d'affichage visuel de taille réduite peuvent être obtenus et les circuits de commande de ces écrans peuvent être intégrés dans des boîtiers et/ou emballages.

Le circuit intégré 10 ou mémoire 10 contenant le message à diffuser peut être choisi parmi ceux dont la mémoire est non volatile ou volatile. Dans ce dernier cas, un message peut avantageusement être effacé pour être remplacé par un autre. Ainsi une plaquette 5 peut être récupérée si elle n'a pas été utilisée pour le message qu'elle comportait au départ.

Outre une alimentation par les piles 11, éventuellement en combinaison avec celles-ci, il peut être fait usage d'autres sources comme des batteries rechargeables, des photopiles, etc., ou encore un circuit récepteur d'énergie accordé sur une fréquence de transmission d'énergie électrique provenant d'un émetteur d'énergie électrique par ondes électromagnétiques. Ces autres sources peuvent également être combinées entre elles et leur nombre peut varier en fonction des besoins.

La plaquette 5 de la figure 2 peut également être mise en oeuvre, ou aménagée à cet effet, dans le cas de boîtiers pour deux disques compacts 6 portés sur les deux faces de la plaque 8, ou dans le cas de boîtiers 2 à deux couvercles pour deux disques, etc.

Les figures 3 et 4 montrent un exemple de réalisation de l'invention dans le cas de cassettes audio 20 et d'un message sonore.

La plaquette 5 présente dans ce cas des dimensions et ouvertures permettant de l'insérer dans un boîtier de protection 2 de type usuel, entre une paroi latérale 7 de ce boîtier 2 et une cassette audio standard 20.

Outre deux trous 21 correspondant aux axes des bobines de la cassette 20 et à des saillies du couvercle du boîtier de protection 2 agencées pour pénétrer dans les trous des bobines, la plaquette 5 comporte par exemple, comme la plaquette 5 de la figure 2, deux piles 11 (11a et 11b) du type CR 2025 ou CR 2016, un circuit intégré 10 du type ISD 2560G ou ISD 1420 ou ISD 1020 et un convertisseur 16 de signaux électriques en sons. Etant donné les possibilités diverses des circuits intégrés 10, le câblage de la présente plaquette peut être le suivant. Les piles 11a, llb sont montées en série. Un moyen de commande de diffusion 4, en genre de commutateur à lamelles relie le pôle négatif de la pile lla à une borne d'un condensateur 13 de 22 µF/10 V, à six broches du circuit intégré 10 et aux bornes de deux résistances 14 et 15 en parallèle, d'une valeur de 10 kΩ chacune. L'autre borne de la résistance 14 est reliée au pôle positif de la pile 11b qui est relié également à deux broches du circuit intégré 10 et à l'autre borne du condensateur 13. L'autre borne de la résistance 15 est reliée à une broche du circuit intégré 10. Le convertisseur 16, qui peut être du même type que dans le cas de l'exemple de la figure 2, est alimenté par deux fils 17 (17a, 17b) reliés à deux broches du circuit intégré 10, par l'intermédiaire d'une résistance 18 de 15 Ω pour le fil 17b et en direct pour le fil 17a.

Le moyen de commande 4 est à nouveau agencé, par exemple sur la plaquette 5, pour que sa manoeuvre puisse être effectuée par pressage l'une vers l'autre des parois latérales 7 et 19 du boîtier 2 dans lequel se trouvent côte à côte une cassette et la plaquette 5.

Des éléments saillants du moyen électronique de diffusion 3 sont agencés sur la plaquette 5 de façon à être situés dans des espaces libres entre une paroi de la cassette d'enregistrement 20 et une paroi 7, 19 correspondante du boîtier de protection 2.

L'emballage 1 décrit ci-dessus est adaptable, éventuellement avec adaptation du boîtier de protection correspondant, pour tout autre type de support d'enregistrement vidéo et/ou audio, informatique, etc.

La plaquette 5 peut éventuellement remplacer un carton imprimé usuel dans des emballages 1 d'enregistrements audio et peut alors être imprimée sur une face visible à travers la paroi 7 (figure 1) et non équipée des éléments constitutifs du moyen de diffusion 3. La plaquette 5 peut alors comprendre (figure 1) un ou des rebords 30 portant des références imprimées visibles sur une ou des tranches du boîtier 2.

Dans une forme de réalisation particulière de l'invention, le moyen électronique de diffusion 3 ci-dessus peut comporter, à la place de la mémoire 10 ou en plus de celle-ci, un récepteur radio et/ou, le cas échéant, vidéo (non représenté) accordé sur au moins une fréquence particulière d'un émetteur radio et/ou vidéo, par exemple installé dans un magasin qui souhaite compléter et personnaliser, pendant la présence de cet emballage dans le magasin, le message enregistré.

Il est des cas où les moyens électroniques de diffusion 3 et de commande de diffusion 4 peuvent être fixés à l'extérieur de l'emballage 1, par exemple dans le cas d'emballages 1 restant dans un domaine clos où ils seraient manipulés en l'absence d'une lumière suffisante pour y lire des indications (par exemple dans une chambre noire de développement photographique) ou encore manipulés par des malvoyants.

Dans le cas d'une diffusion vidéo, un écran vidéo plat (non représenté) du moyen électronique de diffusion 3 est avantageusement agencé dans l'emballage 1, éventuellement dans le boîtier de protection 2, en regard d'une portion transparente de l'emballage 1, afin d'être à l'abri mais visible de l'extérieur.

Le moyen de commande de diffusion 4 mentionné ci-dessus peut être de tout type approprié, comme par exemple du type d'une touche capacitive ou résistive.

Le circuit intégré 10 peut être installé de façon démontable sur un socle fixé à la plaquette 5 de manière à permettre une souplesse supplémentaire lors d'un échange de messages.

Il doit être entendu que l'invention n'est nullement limitée aux formes de réalisation décrites et que bien des modifications peuvent être apportées à ces dernières sans sortir du cadre de la présente invention.

Par exemple, plusieurs messages peuvent être mémorisés dans le circuit intégré 10 et peuvent être enclenchés sélectivement par un actionnement par impulsions du moyen de commande 4 : une impulsion pour un premier message, deux impulsions pour un second message, etc., ou bien une première impulsion enclenche un premier message, une seconde impulsion, un second message, etc. jusqu'à un dernier message pour revenir alors au premier message.

Le ou les messages du circuit intégré 10 peuvent être effacés et renouvelés par des moyens simples, connus de l'homme de métier et ne demandant pas de démontage du circuit intégré 10.

## Revendications

1. Emballage agencé pour protéger au moins un support d'enregistrement du type disque compact (6) audio, vidéo, ou cassette (20) audio, vidéo, comportant un boîtier de protection (2) caractérisé en ce qu'il comporte un moyen électronique (3) de diffusion d'au moins un message sonore et/ou visuel et un moyen de commande (4) de la diffusion du message agencé pour être actionné de l'extérieur de l'emballage.

2. Emballage selon la revendication 1 caractérisé en ce qu'il est scellé pour empêcher les manipulations non autorisée de son contenu.

3. Emballage selon la revendication 1 ou 2 caractérisé en ce que le moyen de commande (4) est un contact (4) muni d'un organe de commande par pression (12a) disposé près d'une portion de paroi (7, 19) déformable élastiquement de façon à ce que l'organe de commande par pression (12a) puisse être actionné de l'extérieur de l'emballage (1) par l'intermédiaire de ladite portion de paroi.

4. Emballage selon la revendication 3 caractérisé en ce que le moyen électronique de diffusion (3) comporte une mémoire (10) agencée pour contenir le message sonore et/ou visuel à diffuser.

5. Emballage selon la revendication 4 caractérisé en ce que ladite mémoire (10) est effaçable pour pouvoir y enregistrer un autre message.

6. Emballage selon la revendication 1 caractérisé en ce que le moyen électronique de diffusion (3) comporte pour son alimentation électrique au moins une pile (lla, llb) et/ou une batterie rechargeable et/ou une photopile et/ou un circuit accordé sur une fréquence de transmission d'énergie électrique provenant d'un émetteur d'énergie électrique par ondes électromagnétiques.

7. Emballage selon la revendication 1 caractérisé en ce qu'un convertisseur (16) de signaux électriques en sons, qui fait partie du moyen de diffusion de messages (3), pour la diffusion d'un message sonore, est agencé dans un renfoncement (9a) d'une partie du boîtier de protection (2), agencé pour coopérer avec un trou central du disque (6).

8. Emballage selon la revendication 7 caractérisé en ce que l'organe de commande par pression (12a) est agencé à proximité du renfoncement (9a) précité de manière à être pressé automatiquement par l'intermédiaire d'une portion élastique de paroi (7, 19) du boîtier voisine du renfoncement (9a) par un individu qui presse l'emballage contre une oreille, à l'endroit du renfoncement (9a), afin d'entendre le message sonore.

9. Emballage selon la revendication 1 caractérisé en ce que des éléments saillants (10, 11, 16) du moyen électronique (3) sont agencés sur une plaquette (5) de façon à être situés dans les espaces libres entre une paroi de la cassette d'enregistrement (20) et une paroi (7, 19) correspondante du boîtier de protection (2).

10. Emballage selon l'une quelconque des revendications précédentes caractérisé en ce que le moyen électronique de diffusion (3) comporte un récepteur radio et/ou vidéo.

11. Emballage selon l'une quelconque des revendications précédentes caractérisé en ce qu'en cas de diffusion vidéo, un écran vidéo plat du moyen électronique de diffusion (3) est agencé dans un emballage (1) de façon à être visible à travers celui-ci.

12. Emballage selon la revendication 1, caractérisé en ce que le moyen électronique (3) de diffusion d'au moins un message sonore et/ou visuel est agencé sur une plaquette (5) fixée dans l'emballage.

## Patentansprüche

1. Verpackung zum Schutz von mindestens einem Aufzeichnungsträger des Typs Compact Disc (6) audio, video, oder Kassette (20) audio, video, mit einem Schutzkasten (2), dadurch gekennzeichnet, dass sie ein elektronisches Sendemittel (3) mindestens einer Ton- und/oder Bildmeldung und ein Steuermittel (4) der Sendung der Meldung umfasst, das von aussen der Verpackung betätigt werden kann.

2. Verpackung nach Anspruch 1, dadurch gekennzeichnet, dass sie versiegelt ist, um unbefugte Betätigungen ihres Inhalts zu verhindern.

3. Verpackung nach Anspruch 1 oder 2, dadurch gekennzeichnet, dass das Steuermittel (4) ein mit einem Drucksteuerorgan (12a) ausgestatteter Kontakt (4) ist, der in der Nähe eines elastisch verformbaren Wandabschnitts (7, 19) angeordnet ist, so dass das Drucksteuerorgan (12a) über den besagten Wandabschnitt von aussen der Verpackung (1) betätigt werden kann.

4. Verpackung nach Anspruch 3, dadurch gekennzeichnet, dass das elektronische Sendemittel (3) einen Speicher (10) zur Aufnahme der zu sendenden Bild- und/oder Tonmeldung umfasst.

5. Verpackung nach Anspruch 4, dadurch gekennzeichnet, dass der besagte Speicher (10) löschbar ist, um dort eine andere Meldung aufzuzeichnen.

6. Verpackung nach Anspruch 1, dadurch gekennzeichnet, dass das elektronische Sendemittel (3) für seine Stromversorgung mindestens eine Batterie (11a, llb) und/oder eine aufladbare Batterie und/oder eine Photozelle und/oder eine Schaltung umfasst, die auf eine Stromenergie-Übertragungsfrequenz geregelt ist, die aus einem Stromenergiesender mit elektromagnetischen Wellen stammt.

7. Verpackung nach Anspruch 1, dadurch gekennzeichnet, dass ein Wandler (16) von elektrischen Signalen in Töne, der Bestandteil der Meldungssendungsmittel (3) für die Sendung einer Tonmeldung ist, in einer Verstärkung (9a) eines Teils des Schutzkastens (2) vorgesehen ist, um mit einem mittleren Loch der Disc (6) zusammenzuwirken.

8. Verpackung nach Anspruch 7, dadurch gekennzeichnet, dass das Drucksteuerorgan (12a) in der Nähe der vorgenannten Verstärkung (9a) angeordnet ist, um automatisch über einen elastischen Wandabschnitt (7, 19) des Kastens in der Nähe der Verstärkung (9a) von einer Person gedrückt zu werden, die die Verpackung an der Stelle der Verstärkung (9a) gegen ein Ohr drückt, um die Tonmeldung zu hören.

9. Verpackung nach Anspruch 1, dadurch gekennzeichnet, dass aus dem elektronischen Mittel (3) herausragende Elemente (10, 11, 16) auf einem Plättchen (5) angeordnet sind, um sich in die Freiräume zwischen einer Wand der Aufzeichnungskassette (20) und eine entsprechende Wand (7, 19) des Schutzkastens (2) einzufügen.

10. Verpackung nach einem der vorstehend genannten Ansprüche, dadurch gekennzeichnet, dass das elektronische Sendemittel (3) einen Funk- und/oder Videoempfänger umfasst.

11. Verpackung nach einem der vorstehend genannten Ansprüche, dadurch gekennzeichnet, dass im Fall einer Videosendung ein flacher Video-Bildschirm des elektronischen Sendemittels (3) in einer Verpackung (1) vorgesehen ist, um durch diese hindurch sichtbar zu sein.

12. Verpackung nach Anspruch 1, dadurch gekennzeichnet, dass das elektronische Sendemittel (3) von mindestens einer Ton- und/oder Bildmeldung auf einem in der Verpackung befestigten Plättchen (5) angeordnet ist.

## Claims

1. Casing designed to protect at least one recording medium such as an audio or video compact disc (6) or an audio or video cassette (20) comprising a protective case (2) characterized in that it comprises electric means (3) for transmitting at least one audio and/or visual message and control means (4) for transmitting the message, said control means being designed to be actuated from outside the casing.

2. Casing according to claim 1 characterized in that it is sealed to prevent unauthorized access to its contents.

3. Casing according to claim 1 or 2 characterized in that the control means (4) is a contact (4) provided with a pressure control device (12a) located near a section of surface (7, 19) that is elastically distortable such that the pressure control device (12a) may be actuated from outside casing (1) through said section of surface.

4. Casing according to claim 3 characterized in that electronic transmission means (3) comprise a memory (10) that is designed to contain the audio and/or visual message to be transmitted.

5. Casing according to claim 4 characterized in that said memory (10) can be erased to allow another message to be recorded.

6. Casing according to claim 1 characterized in that electronic transmission means (3) comprise at least one battery (11a, 11b) providing the power supply and/or a rechargeable battery and/or a photoelectric cell and/or a circuit tuned to an electrical supply transmission frequency sent by an electrical supply transmitter using electromagnetic waves.

7. Casing according to claim 1 characterized in that an electric audio signal converter (16), that is part of the message transmitting means (3) for transmitting an audio message, is fitted in a recess (9a) in a section of the protective case (2) designed to operate in conjunction with a central hole in the disc (6).

8. Casing according to claim 7 characterized in that the pressure control device (12a) is fitted close to the above-mentioned recess (9a) such that it is automatically pressed by an elastic section of the surface (7, 19) of the case close to the recess (9a) by a user who presses the recess (9a) zone of the casing to the ear in order to hear the audio message.

9. Casing according to claim 1 characterized in that projecting parts (10, 11, 16) of electronic means (3) are disposed on a plate (5) such that they are located in the vacant spaces between a surface of the recording cassette (20) and a matching surface (7, 19) of protective case (2).

10. Casing according to any of the preceding claims characterized in that electronic transmission means (3) comprise a radio and/or video receiver.

11. Casing according to any of the preceding claims characterized in that in the event of a video being shown, a flat video screen of the electronic transmission means (3) is fitted into a casing (1) such that it is visible through said casing.

12. Casing according to claim 1 characterized in that electronic means (3) for transmitting at least one audio and/or visual message are arranged on a plate (5) that is fastened into the casing.
